Europäisches Patentamt

European Patent Office

Office européen des brevets

(11) Numéro de publication : **0 541 451 B1**

(12) **FASCICULE DE BREVET EUROPEEN**

(45) Date de publication du fascicule du brevet :
**12.07.95 Bulletin 95/28**

(51) Int. Cl.⁶ : **G01V 1/28**

(21) Numéro de dépôt : **92403009.1**

(22) Date de dépôt : **06.11.92**

(54) **Procédé de détermination de la trajectoire d'un rai à travers un milieu géologique tridimensionnel.**

(30) Priorité : **06.11.91 FR 9113671**

(43) Date de publication de la demande :
**12.05.93 Bulletin 93/19**

(45) Mention de la délivrance du brevet :
**12.07.95 Bulletin 95/28**

(84) Etats contractants désignés :
**DE FR GB**

(56) Documents cités :
**US-A- 5 062 086**
**US-A- 5 067 113**
**COMPUTER JOURNAL, vol. 28, no. 3, juillet**
**1985, London, GB, pages 335-339, A.OXLEY:**
**"Surface fitting by triangulation"**
**DATABASE WPIL;Section EI, Week 8913,**
**Derwent Publications Ltd., London, GB; Class**
**T01, AN 89-099784 & US-A-48129902 (ADAMS**
**ET AL.) 14 Mars 1989**

(73) Titulaire : **TOTAL Société anonyme dite :**
**Tour TOTAL,**
**24, Cours Michelet**
**F-92800 Puteaux (FR)**

(72) Inventeur : **Guiziou, Jean-Luc**
**29, rue Desaix**
**F-78800 Houilles (FR)**
Inventeur : **Mallet, Jean Laurent**
**8, rue de la Croix Gagnée**
**F-54000 Nancy (FR)**

(74) Mandataire : **Jolly, Jean-Pierre et al**
**Cabinet Jolly**
**54, rue de Clichy**
**F-75009 Paris (FR)**

## Description

La présente invention concerne un procédé de détermination de la trajectoire d'un rai à travers un milieu géologique tridimensionnel. Plus précisément, l'invention concerne un procédé de détermination du trajet d'une onde vibratoire se propageant, entre deux points fixes (par exemple, une source de l'onde et un récepteur de celle-ci), dans un milieu tridimensionnel hétérogène, notamment dans un milieu dans lequel les surfaces matérialisant les interfaces entre deux zones de natures ou de propriétés différentes, sont complexes et présentent, par exemple, des plis, des cassures ou des discontinuités.

On rappelle que le terme "rai" désigne une courbe ou rayon sismique - déterminée dans la pratique par des modèles mathématiques- qui, en tout point du front de l'onde se propageant dans le sous-sol, est perpendiculaire à ce front d'onde.

On rappelle également que la trajectoire d'un rai sismique qui se propage entre deux points fixes d'un milieu est régie par le principe de Fermat, qui énonce que cette trajectoire correspond à une durée de trajet stationnaire, en général minimale. C'est sur ce principe fondamental que sont fondés les procédés connus de détermination des trajectoires des rais et notamment celui de la présente invention.

Dans la suite de la présente description, on se référera à un macro-modèle géologique, c'est-à-dire à une représentation du sous-sol qui ne s'intéresse qu'aux entités géologiques majeures. L'épaisseur de chaque entité de ce modèle, ou macro-couche, représente quelques centaines de mètres. Ces macro-couches sont séparées par des interfaces, dont la forme spatiale peut être quelconque.

Les procédés usuels de détermination des rais sismiques dans des milieux tridimensionnels hétérogènes ne s'appliquent généralement qu'à des interfaces de formes géométriques simples, et ils ne permettent pas de prendre en considération des objets géologiques complexes, tels que des failles inverses, des dômes de sel, des chevauchements ou autres. De tels procédés ont été décrits, par exemple, par Fawcett, J.A., 1983 "Three-dimensional ray-tracing and ray inversion in layered mediae", PhD thesis, California Institute of Technology, ou par Guiziou, J.L. et Haas, A., 1988, "Three-dimensional travel time inversion in anisotropic media" : 58th Annual SEG Meeting, expanded abstract, Anaheim, 1089-1091.

On a toutefois déjà proposé des méthodes pour la détermination des trajectoires des rais à travers des surfaces splines complexes à trois dimensions (Pereyra, V., 1988, "Two-Point Ray Tracing in complex 3-D media", 58th Annual SEG Meeting, expanded abstract, Anaheim, 1056-1060), mais ces procédés exigent des surfaces splines d'une grande régularité, ce qui rend leur utilisation délicate pour la modélisation d'objets géologiques réels.

La présente invention vise à remédier à ces inconvénients de la technique connue en proposant un procédé de détermination de la trajectoire des rais qui soit applicable à des formations géologiques complexes.

Ce procédé fait appel à la technique de modélisation d'une surface par maillage de cette surface sous forme de triangles (voir FR-A-2 652 180). Cette technique a apporté un progrès considérable dans la détermination des interfaces géologiques.

Elle consiste, à partir de données géométriques relatives à des points spécifiques connus de la surface à modéliser, à effectuer un maillage triangulé de cette surface passant par ces points. On mémorise ensuite, à une adresse spécifique à chaque noeud, les coordonnées du noeud, le nombre de satellites du noeud et une information d'accès aux adresses de ces satellites. Pour chaque noeud, on définit un indice de rugosité local obtenu à partir d'une somme pondérée des coordonnées actuelles du noeud et de ses satellites. On définit également la somme d'un indice de rugosité global, constitué par l'addition de tous les indices de rugosité locaux, et d'un indice global de violation des coordonnées géométriques. On ajuste enfin de façon itérative les coordonnées des noeuds indéterminées, en vue de créer une représentation de la surface à partir des coordonnées ajustées.

Les points connus et ajustés de la surface maillée définissent des triangles, dont les facettes ne constituent qu'un support géométrique de la surface réelle, et les discontinuités de pente qui existent à la jonction des triangles doivent pour l'essentiel être considérées comme des "artéfacts" de représentation. Si la détermination des rais est effectuée par des méthodes classiques, sur la base de ces facettes en forme de triangle, il est donc clair que le rai ainsi calculé et le temps de trajet associé seront imprécis et très éloignés de la réalité.

Pour améliorer la précision de calcul du trajet, la présente invention propose de partir également d'une surface maillée définissant des facettes en forme de triangle, pour calculer un temps de trajet au voisinage d'un rai de départ, mais de faire ensuite abstraction de ces facettes en calculant la trajectoire du rai sismique par un procédé en trois étapes, basé sur la topologie triangulée des surfaces. Ce procédé correspond à la mise en oeuvre d'une méthode dite de "bending", c'est-à-dire par perturbation d'une trajectoire initiale, qui s'appuie sur la combinaison d'un algorithme de parcours de graphe et d'un algorithme d'ajustement quadratique du temps de trajet.

La présente invention a donc pour objet un procédé de détermination de la trajectoire d'un rai, depuis un

EP 0 541 451 B1

premier point ou point source jusqu'à un second point ou point récepteur, à travers une structure géologique tridimensionnelle dont les interfaces entre couches ont été modélisées sous la forme de surfaces maillées comprenant une pluralité de points, dont les coordonnées géométriques sont connues et qui sont réunis deux à deux par des segments de droite définissant des facettes triangulaires contiguës, ce procédé étant caractérisé en ce qu'il comprend les phases suivantes :

- A déterminer dans le voisinage d'un rai initial quelconque, parmi les trajets partant du premier point et passant obligatoirement par au moins un sommet de triangle de chacune des surfaces maillées traversées par le rai, pour aboutir au second point, le trajet optimal correspondant à une durée de trajet minimal, trajet dénommé ci-après "rai atomique stationnaire" ;
- B perturber localement le trajet optimal ainsi déterminé en tenant compte des caractéristiques des sommets des triangles voisins de ceux empruntés par ce trajet optimal, en décomposant le temps de trajet global en une somme de temps de trajets élémentaires correspondant aux distances parcourues successivement entre les différentes surfaces et en effectuant un ajustement quadratique du temps de trajet global, de manière à minimiser celui-ci, en vue de déterminer les points d'impact approchés du rai sur les facettes successives qu'il rencontre.

Dans le cas où le maillage des surfaces modélisées est peu serré, c'est-à-dire si les côtés des facettes des mailles ont une longueur supérieure à environ 200 mètres, le procédé défini ci-dessus comprendra une phase supplémentaire optionnelle, C, consistant à perturber localement chaque point d'impact du rai sur les facettes en vue d'annuler par itération le gradient du temps de trajet, de façon à obtenir la trajectoire à temps minimal.

Comme il ressortira de la description détaillée qui suivra de la mise en oeuvre de ce procédé, celui-ci minimise les recherches d'intersection entre la trajectoire du rai et les interfaces géologiques, recherches qui peuvent être très longues et coûteuses si les trajectoires de plusieurs milliers de rais doivent être calculées.

On notera que ce procédé permet d'appliquer le principe de Fermat à des interfaces géologiques maillées sous forme de facettes triangulaires et que, jusqu'à présent, à part le procédé décrit dans la demande de brevet français mentionnée ci-dessus, il n'existait pas de méthode permettant de tracer des rais sans interpolation à travers des surfaces triangulées.

Comme les deux étapes du procédé ci-dessus sont liées à la topologie des surfaces triangulées, on pourra avantageusement sauvegarder dans une mémoire les résultats intermédiaires des différents calculs.

Une forme de mise en oeuvre de l'invention va être décrite ci-après, en référence aux dessins schématiques annexés. Sur ces dessins :

La figure 1 est une vue en perspective illustrant le problème que se propose de résoudre la présente invention;

La figure 2 illustre la triangulation des interfaces modèlisées d'une structure géologique à trois dimensions et la détermination du rai optimal, conformément à la première phase du procédé conforme à l'invention ;

La figure 3 illustre la définition d'un repère local, centré sur chaque point du rai optimal obtenu par la première phase du procédé, utilisé pour la détermination du point d'impact du rai stationnaire sur une facette d'une interface triangulée, conformément à la deuxième phase du procédé conforme à l'invention ;

La figure 4 illustre une section verticale de l'ensemble des rais atomiques stationnaires, correspondant à des fronts d'onde se propageant à travers cinq couches, par un procédé connu de simulation d'une acquisition dite en point milieu commun ;

La figure 5 illustre le résultat du positionnement des points d'impact des rais atomiques sur les facettes triangulées, selon le procédé d'ajustement quadratique conforme à l'invention, les rais atomiques y étant figurés aussi, pour bien illustrer la valeur ajoutée du procédé d'ajustement quadratique;

La figure 6 montre la position finale des rais, après obtention d'un convergence des points d'impact vers leur position optimale;

La figure 7 illustre les rais atomiques stationnaires, calculés dans le cas d'une faille inverse, par un procédé connu de simulation d'une acquisition dite en point de tir;

La figure 8 illustre le résultat du positionnement des points d'impact des rais atomiques sur les facettes triangulées.

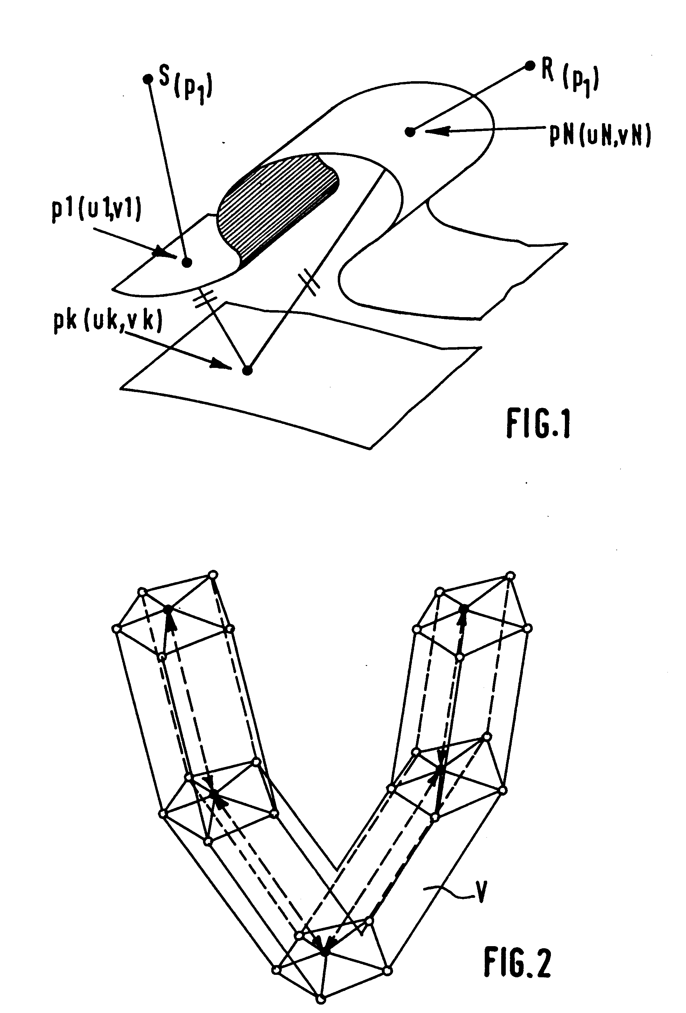

On se référera d'abord à la figure 1 des dessins.

L'invention propose de coder tout rai sismique reliant un point source S à un point de réception R par une suite ordonnée de $(N+1)$ points cartésiens, dont le premier, $P_o$, correspond au point source S, le dernier, $P_{N+1}$, correspond au point récepteur R, et les N points intermédiaire $P_k$ correspondent aux points d'impact successifs du rai avec les interfaces de la structure géologique traversée par le rai sismique. Dans le cas du dessin, deux interfaces, $I_1$ et $I_2$, sont représentées, l'interface $I_1$ étant traversée par le rai provenant du point source S, qui se réfléchit ensuite sur l'interface $I_2$, avant de traverser à nouveau l'interface $I_1$, pour rejoindre le point récepteur

3

R.

Dans le cas général de surfaces géologiques sans restrictions géométriques, les coordonnées cartésiennes (x,y,z) des points d'intersection du rai avec les interfaces ne dépendent que de deux variables indépendantes, que l'on notera (u,v), $\vec{x}$ désignant le vecteur des variables indépendantes (u,v) le long du rai.

Le temps de trajet de l'onde entre S et R, noté $t_{sr}$, est défini comme la somme des (N+1) temps de trajets élémentaires $t_k$ entre deux points d'impact successifs.

## 1- Recherche d'un rai atomique stationnaire

Etant donné une trajectoire initiale quelconque reliant les points fixes S et R, on se propose de rechercher une trajectoire $R_{SR}$ qui réponde aux conditions suivantes :
- les N points d'impact de la trajectoire $R_{SR}$ entre S et R correspondent à des sommets aux coordonnées connues des triangles des surfaces à facettes modélisant les interfaces;
- compte-tenu de la contrainte précédente, le temps de trajet du rai ainsi défini est localement minimal.

Dans ce but, la première phase du procédé conforme à l'invention peut comprendre les étapes successives suivantes :

(1) Rattacher chaque point d'impact du rai initial au sommet du triangle le plus proche.

(2) Pour chaque sommet de triangle contigu ou "satellite" du point d'impact $P_1$ :
- calculer le temps de trajet élémentaire entre la source S et le sommet courant;
- sauvegarder en mémoire le temps de trajet ainsi calculé.

(3) Pour chaque atome satellite $P_{k,i}$ d'un point d'impact $P_k$ ($2 \leq k \leq N$) :
. Calculer le temps le trajet entre l'atome courant $P_{k,i}$ et chaque atome satellite $P_{k-1,i}$ du point d'impact $P_{k-1}$,
. Rechercher, parmi les atomes satellites de $P_{k-1}$, celui (noté $P_{k-1,j}$), pour lequel le temps de trajet total depuis la source jusqu'à $P_{k,i}$ est minimal ; ce temps de trajet total est la somme du temps affecté à $P_{k-1,j}$ et du temps élémentaire entre $P_{k-1,j}$ et $P_{k,i}$,
. Affecter le temps minimal au point $P_{k,i}$,
. Mémoriser le lien avec le point $P_{k-1,j}$.

(4) Calculer le temps de trajet élémentaire entre chaque atome satellite du dernier point d'impact $P_N$ et le point récepteur.

(5) Affecter au point récepteur le temps de trajet minimal depuis la source.

(6) Mémoriser le sommet satellite de $P_N$ qui correspond à ce temps minimal.

Les étapes (2) à (6) permettent de rechercher le rai atomique optimal dans un tube centré autour du rai atomique initial et dont les arêtes passent par les sommets contigus à ce rai des triangles des surfaces maillées.

On connaît déjà, dans la technique, des algorithmes permettant de rechercher un trajet optimal à travers un graphe (voir, notamment, l'algorithme de Dijkstra), et le procédé de l'invention adapte donc ces algorithmes connus à la recherche d'un rai optimal dans le voisinage d'un rai existant, en utilisant la topologie triangulée des interfaces géologiques. Aucune recherche des points d'intersection du rai avec les interfaces n'est nécessaire.

Dans le cas où le rai atomique initial est très éloigné du rai optimal recherché, les étapes (2) à (6) seront appliquées itérativement jusqu'à ce que la trajectoire atomique du rai reste stationnaire.

Les phases qui viennent d'être mentionnées sont indépendantes de la formulation utilisée pour le calcul du temps de trajet élémentaire entre deux points d'impact successifs. Ceci constitue un avantage important dans le cas où les diverses couches géologiques présentent des hétérogénéités de vitesse de propagation des ondes.

Lorsque plusieurs centaines, voire plusieurs milliers de rais doivent être déterminés, il sera naturellement préférable de mémoriser les temps de trajet élémentaires entre les sommets des triangles de la topologie triangulée des interfaces.

## 2. Positionnement des points d'impact sur les facettes triangulées, par ajustement quadratique.

La recherche du rai atomique stationnaire $R_{SR}$ qui vient d'être décrite, utilise donc la granularité de la topologie triangulée des interfaces géologiques. Ceci permet de déterminer rapidement une trajectoire avoisinant la trajectoire exacte du rai.

Ainsi qu'il a été exposé ci-dessus, la seconde phase du procédé conforme à l'invention consiste à perturber globalement le rai atomique stationnaire, afin de positionner les points d'impact sur les facettes triangulées, dans un voisinage plus proche du rai final.

Etant donné que la trajectoire $\tilde{R}_{SR}$ conduit à un temps de trajet plus court que les temps de trajet associés aux trajectoires avoisinantes, il est raisonnable de considérer que la fonction temps de trajet, tsr($\vec{x}$), présente un minimum dans le voisinage du rai atomique stationnaire, paramétrisé par le vecteur $X_o$. Par conséquent, on peut approcher la fonction tsr($\vec{x}$) dans le voisinage du rai atomique par une fonction quadratique de la forme :

$$t_{sr}(\vec{x}) = t_0 + B^t \vec{x} + \vec{x}^t A \vec{x} \qquad (1)$$

où $t_o$ est le temps de trajet correspondant à $\vec{x}_o$, origine du vecteur $\vec{x}$ des paramètres (u,v) le long du rai.

Le vecteur B correspond aux termes linéaires de l'ajustement quadratique.

La matrice carrée A correspond aux termes quadratiques de l'ajustement.

L'équation du gradient du temps de trajet s'écrit alors :

$$\nabla t_{sr} = B + 2.A\vec{x} \qquad (2)$$

On recherche la configuration des points d'impact P* qui conduit à un rai stationnaire et le vecteur $\vec{x}$ * correspondant à un tel rai est solution de l'équation :

$$B + 2.A\vec{x} * = (0) \qquad (3)$$

L'équation (3) montre qu'il est possible d'estimer la trajectoire optimale, dès lors que l'on est en mesure de bâtir un ajustement quadratique du temps de trajet qui soit valable dans le voisinage du rai atomique stationnaire.

Procédure de calcul de l'ajustement quadratique

On se référera à la figure 2 des dessins annexés.

Partant du rai atomique stationnaire, on recherche un rai stationnaire dans un volume V défini dans l'espace à trois dimensions de la façon suivante : au niveau de chaque point d'impact du rai, l'intersection entre V et la surface triangulée est une ligne polygonale reliant les sommets des triangles contigus (satellites) du point d'impact.

On définit un repère local autour de chaque point d'impact du rai atomique de la manière suivante :

On appellera $\vec{N}_k^0$ le vecteur normal à la surface au point d'impact $p_k^0$ et P le plan perpendiculaire à $\vec{N}_k^0$.

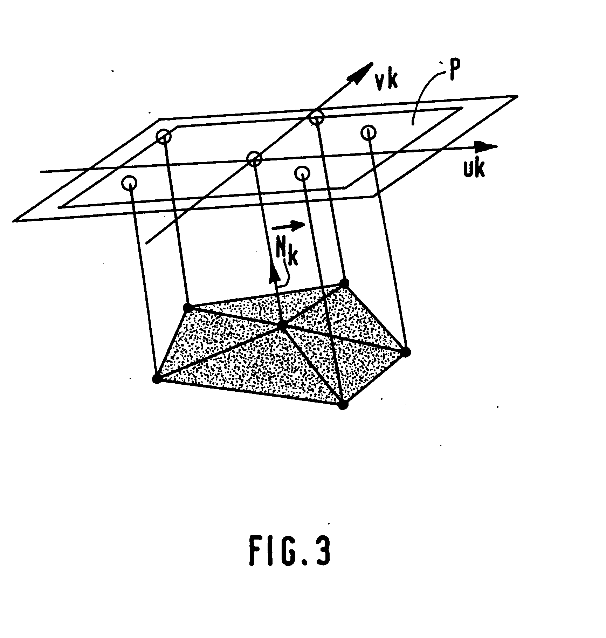

Comme illustré sur la figure 3, les sommets des triangles qui entourent le point $p_k^0$ sont projetés sur le plan P dans la direction du vecteur normal $\vec{N}_k^0$.

On sélectionne alors un système de coordonnées orthogonales $(u_k,v_k)$ de telle sorte que les coordonnées $(u_i,v_i)$ des atomes projetés soient bornées par (-1,1).

Si N est le nombre de points d'impact, hormis la source et le récepteur, alors le vecteur gradient temps B est de dimension N et le hessien A est une matrice NxN. Afin de calculer les composantes de B et A, et donc de bâtir l'ajustement quadratique, on écrit comme suit le temps de trajet entre s et r :

$$t_{sr}(\vec{x}) = \sum_{k=1}^{N+1} t_k(\vec{x})$$

Dans le voisinage du rai stationnaire, on fait l'hypothèse que chaque temps de trajet élémentaire $t_k$ (entre les points $P_{k-1}$ et $P_k$) peut aussi être approché par une fonction quadratique. On va donc bâtir l'ajustement quadratique pour chaque temps de trajet élémentaire.

Le long de chaque segment K, on souhaite estimer le vecteur $C^t = (a_k,b_k,c_k,d_k,e_k,f_k,g_k,h_k,m_k,n_k,o_k,p_k,q_k,r_k)$ des coefficients d'un polynôme quadratique en $u_{k-1}$, $v_{k-1}$, $u_k$, et $v_k$.

On estime les coefficients C, au sens des moindres carrés, en ajustant le meilleur polynôme quadratique $\Phi$ à un ensemble T de valeurs $t_{k,1}$ ($u_{k-1,1}$, $v_k$-1,1, $u_{k,1}$, $v_{k,1}$) calculées le long de L segments situés dans le voisinage du segment ($u_{k-1,o}$, $v_{k-1,o}$, $u_{k,o}$, $v_{k,o}$). Cet ajustement est réalisé en résolvant le système :

$$
\left\{
\begin{array}{l}
\phi_k(u_{k-1,1}, \ v_{k-1,1}, \ u_{k,1}, \ v_{k,1}) = t_{k,1} \\
\cdots \qquad\qquad\qquad\qquad\qquad \cdots \\
\phi_k(u_{k-1,i}, \ v_{k-1,i}, \ u_{k,i}, \ v_{k,i}) = t_{k,i} \qquad (S) \\
\cdots \qquad\qquad\qquad\qquad\qquad \cdots \\
\phi_k(u_{k-1,1}, \ v_{k-1,1}, \ u_{k,1}, \ v_{k,1}) = t_{k,1}
\end{array}
\right.
$$

Estimer le vecteur C en résolvant (S) nécessite que le nombre d'équations du système soit supérieur ou égal à 14. En pratique, le nombre d'équations peut varier d'un segment à l'autre en raison de la variabilité des topologies triangulées d'une surface à l'autre. Par conséquent, (S) est résolu en appliquant la méthode d'inversion généralisée de More-Penrose. Parmi toutes les solutions possibles du système sur-déterminé, la méthode de More-Penrose permet de sélectionner la trajectoire stationnaire la plus proche de la trajectoire atomique.

A l'instar de la recherche du rai atomique stationnaire, cette seconde phase du procédé de l'invention utilise donc le potentiel de la topologie triangulée. Le codage du temps de trajet global comme une somme de temps de trajets élémentaires est le point fondamental qui permet de sauvegarder en mémoire l'approximation quadratique du temps de parcours d'un front d'onde entre deux sommets particuliers de deux interfaces successives. Une telle démarche est particulièrement intéressante, car, exception faite de la couche géologique superficielle, ces résultats intermédiaires sont indépendants de la configuration géométrique des couples source-récepteur.

3- Convergence du rai vers sa trajectoire optimale

Comme il a été indiqué ci-dessus, les deux phases du procédé qui viennent d'être décrites sont suffisantes pour définir avec une précision satisfaisante la trajectoire d'un rai lorsque le maillage des interfaces est suffisamment serré, c'est-à-dire lorsque les distances entre les sommets des triangles ou facettes du maillage est au maximum d'environ 200 m.

Dans le cas contraire, il est nécessaire d'affiner la trajectoire du rai jusqu'à l'obtention de la précision requise à la fois pour la trajectoire et pour le temps de trajet associé, en complétant les deux phases précédemment décrites du procédé conforme à l'invention par une troisième phase optionnelle.

Cette dernière phase repose, elle aussi, sur une approximation quadratique du temps de trajet global au voisinage de la trajectoire courante du rai. Cependant, au lieu de perturber globalement la trajectoire, on propose de procéder comme suit :

(1) Pour chaque point d'impact du rai sur une facette des interfaces modélisées :
- construire les matrices de passage du repère cartésien au repère local du triangle contenant le point d'impact,
- sauvegarder ces matrices en mémoire.

(2) Tant que la précision requise pour la stationnarité du temps de trajet n'est pas satisfaite pour chaque point d'impact :
- estimer le gradient du temps de trajet global par rapport au point d'impact courant ,
- estimer le hessien du temps de trajet global par rapport au point d'impact courant ,
- repositionner le point d'impact dans le repère local, de telle sorte que le gradient temps s'annule,
- calculer les coordonnées cartésiennes de la nouvelle position du point d'impact.

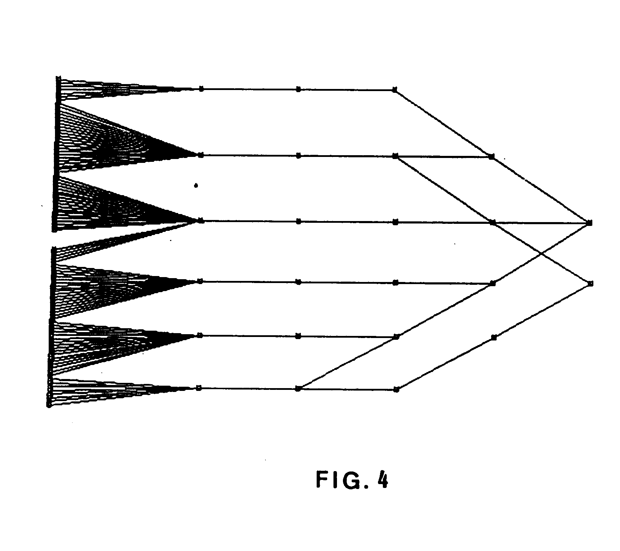

Il est ainsi possible d'obtenir une approximation très satisfaisante des rais se propageant dans une structure géologique à trois dimensions, comme le montrent les figures 4 à 8.

6

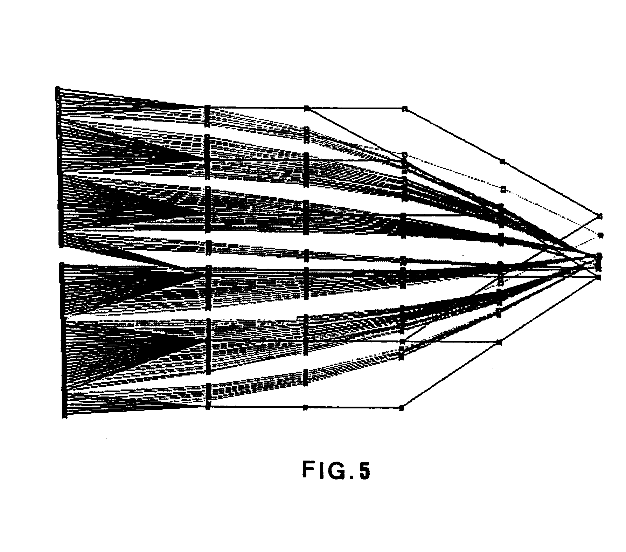

Comme on le voit sur la figure 5, qui illustre la détermination des rais , dans le cas d'une acquisition dite en point milieu commun, par les deux phases du procédé conforme à l'invention, les rais sont regroupés en faisceaux et leur propagation apparaît plus conforme à la physique de propagation des ondes que dans le cas de la figure 4, relative à une détermination limitée aux atomes des surfaces triangulées.

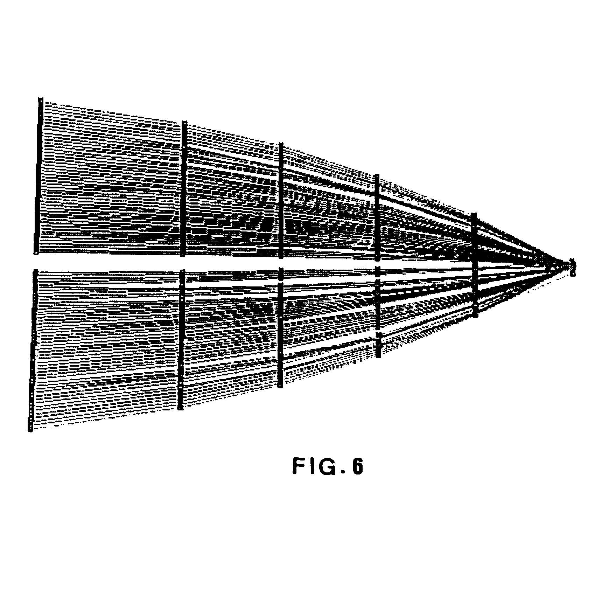

La figure 6 montre que la troisième phase, optionnelle, du procédé de l'invention permet d'affiner la trajectoire des rais, dans le but d'obtenir une précision optimale.

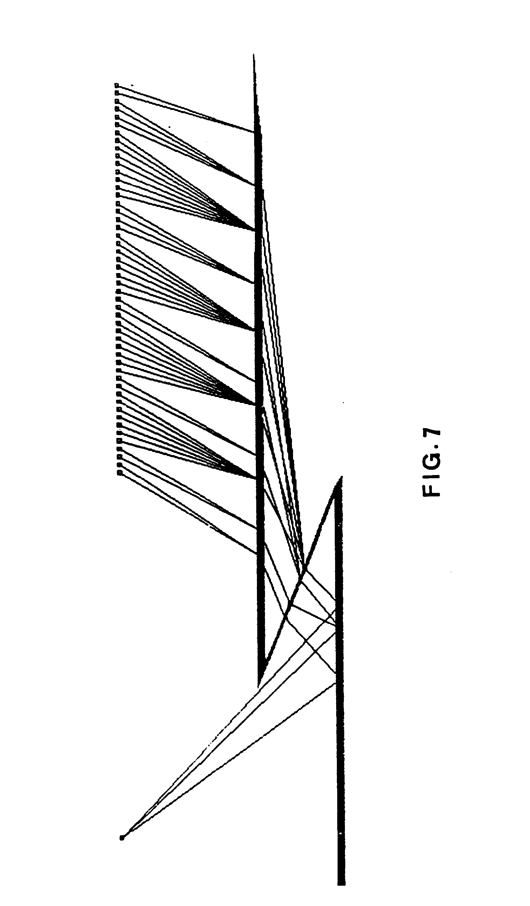

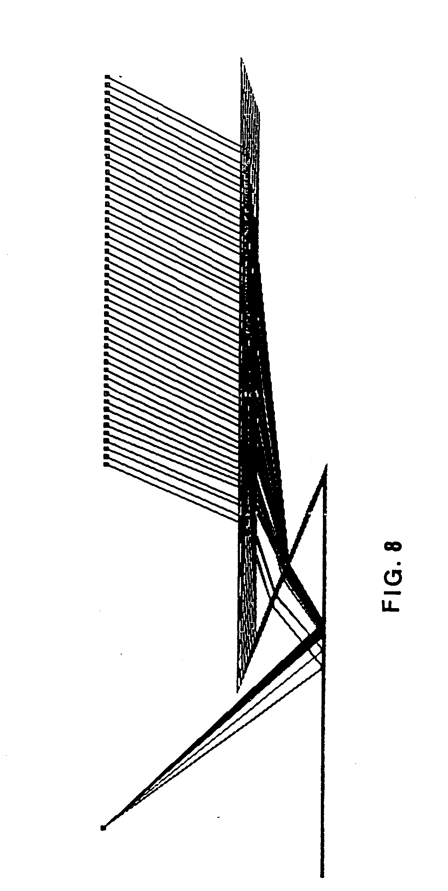

Les figures 7 et 8 illustrent les deux premières phases du procédé dans le cas d'une acquisition dite en point de tir. Les rais se propagent à travers une faille inverse.

**Revendications**

1. Procédé de détermination de la trajectoire d'un rai, depuis un premier point ou point source jusqu'à un second point ou point récepteur, à travers une structure géologique tridimensionnelle dont les interfaces entre couches ont été modélisées sous la forme de surfaces maillées comprenant une pluralité de points, dont les coordonnées géométriques sont connues et qui sont réunis deux à deux par des segments de droite définissant des facettes triangulaires contiguës, ce procédé étant caractérisé en ce qu'il comprend les phases suivantes :
   - A déterminer dans le voisinage d'un rai initial quelconque, parmi les trajets partant du premier point et passant par au moins un sommet de triangle de chacune des surfaces maillées pour aboutir au second point, le trajet optimal correspondant à une durée de trajet minimal ;
   - B perturber localement le trajet optimal ainsi déterminé en tenant compte des caractéristiques des sommets des triangles voisins de ceux empruntés par ce trajet optimal, en décomposant le temps de trajet global en une somme de temps de trajets élémentaires correspondant aux distances parcourues successivement entre les différentes surfaces et en effectuant un ajustement quadratique du temps de trajet global, de manière à minimiser celui-ci, en vue de déterminer les points d'impact approchés du rai sur les facettes successives qu'il rencontre.

2. Procédé selon la revendication 1, caractérisé en ce qu'il comprend une phase additionnelle consistant à perturber localement chaque point d'impact du rai sur les facettes, en vue d'annuler par itération le gradient du temps de trajet, de façon à obtenir la trajectoire à temps minimal.

3. Procédé selon l'un des revendications 1 et 2, caractérisé en ce que la première phase A comprend les étapes suivantes :
   (1) Rattacher chaque point d'impact du rai initial au sommet du triangle le plus proche;
   (2) Pour chaque sommet de triangle contigu ou "satellite" du point d'impact p1 :
      - calculer le temps de trajet élémentaire entre la source S et le sommet courant.
      - sauvegarder en mémoire le temps de trajet ainsi calculé.
   (3) Pour chaque atome satellite $P_{k,i}$ d'un point d'impact $P_k$ ($2 \leqq k \leqq N$) :
      . Calculer le temps le trajet entre l'atome courant $P_{k,i}$ et chaque atome satellite $P_{k-1,i}$ du point d'impact $P_{k-1}$,
      . Rechercher, par les atomes satellites de $P_{k-1}$, celui (noté $P_{k-1,j}$), pour lequel le temps de trajet total depuis la source jusqu'à $P_{k,i}$ est minimal ; ce temps de trajet total est la somme du temps affecté à $P_{k-1,j}$ et du temps élémentaire entre $P_{k-1,j}$ et $P_{k,i}$,
      . Affecter le temps minimal au point $P_{k,i}$,
      . Mémoriser le lien avec le point $P_{k-1,j}$.
   (4) Calculer le temps de trajet élémentaire entre chaque atome satellite du dernier point d'impact $P_N$ et le point récepteur.
   (5) Affecter au point récepteur le temps de trajet minimal depuis la source.
   (6) Mémoriser l'atome satellite de $P_N$ qui correspond à ce temps minimal.

4. Procédé selon l'une des revendications 1 à 3, caractérisé en ce que la seconde phase B comprend les étapes suivantes :
   (1) Pour chaque point d'impact $P_k$ du rai sur un sommet de triangle :
      - construire le plan perpendiculaire au vecteur normal à la surface triangulée en ce point,
      - bâtir le repère local $(u_k, v_k)$ dans ce plan,
      - construire les matrices de projection de chaque atome satellite du point courant sur le plan du repère local,

- sauvegarder ces matrices en mémoire.

(2) Pour chaque segment k du rai atomique stationnaire :

- calculer un ensemble T de valeurs $t_{k,1}(u_{k-1,1}, v_{k-1,1}, u_{k,1}, v_{k,1})$ calculées le long des L segments reliant les satellites du point $P_{k-1}$ aux satellites du point $P_k$,

- estimer le vecteur $c^t = (a_k, \ldots, r_k)$ des coefficients d'un polynôme quadratique $\Phi$ en $u_{k-1}$, $v_{k-1}$, $u_k$ et $v_k$ en résolvant le système :

$$\begin{cases} \Phi(\,\_\ \_\ \_\ \_\ \_\ \_\,) = t_{k,1} \\ \Phi(\,\_\ \_\ \_\ \_\ \_\ \_\,) = t_{k,L} \end{cases} \quad (S)$$

- sauvegarder en mémoire le vecteur $c^t$ ainsi estimé ,

- construire le vecteur B, de l'ajustement quadratique du temps de trajet

$$t_{sr}(\vec{x}) = t_o + B^t\vec{x} + \vec{x}^t\ A\vec{x},$$

à partir des termes linéaires de $C^t$,

- construire la matrice A, de l'ajustement quadratique du temps de trajet :

$$t_{sr}(\vec{x}) = t_o + B^t\vec{x} + \vec{x}^t\ A\vec{x},$$

à partir des termes quadratiques de $C^t$.

(3) Rechercher la configuration des points d'impact P* et le vecteur X* y afférent, correspondant au rai stationnaire solution de l'équation :

$$B + 2\ \overrightarrow{AX}^* = \vec{0}$$

5. Procédé selon l'une des revendications 1 à 4, caractérisé en ce que la troisième phase C comprend les étapes suivantes :

(1) Pour chaque point d'impact du rai sur une facette des interfaces modélisées :
- construire les matrices de passage du repère cartésien au repère local du triangle contenant le point d'impact,
- sauvegarder ces matrices en mémoire;

(2) Tant que la précision requise pour la stationnarité du temps de trajet n'est pas satisfaite pour chaque point d'impact :
- estimer le gradient du temps de trajet global par rapport au point d'impact courant ,
- estimer le hessien du temps de trajet global par rapport au point d'impact courant ,
- repositionner le point d'impact dans le repère local, de telle sorte que le gradient temps s'annule,
- calculer les coordonnées cartésiennes de la nouvelle position du point d'impact.

**Patentansprüche**

1. Verfahren zur Bestimmung der Bahn eines Strahles ab einem ersten oder Quell-Punkt bis zu einem zweiten oder Empfangs-Punkt quer durch eine dreidimensionale geologische Struktur, deren zwischen Gesteinsschichten verlaufende Grenzflächen in einem Rechenmodell maschenartige Oberflächen mit einer Mehrzahl aufgrund ihrer geometrischen Koordinaten bekannter Punkte bilden, die paarweise untereinander durch gerade Strecken so verbunden sind, daß aneinandergrenzende Dreieckflächen/-facetten entstehen, gekennzeichnet durch folgende Schritte:
- A: In der Nähe eines beliebigen Anfangsstrahls wird aus den vom ersten Punkt ausgehenden und durch mindestens einen Dreiecksscheitel in jeder Maschenfläche zum zweiten Punkt führenden Strecken die optimale Strecke ermittelt, die einer minimalen Laufzeit entspricht;
- B: Zur näherungsweisen Bestimmung der Auftreffpunkte des Strahles auf den ihm nacheinander begegnenden Facetten wird die als optimal ermittelte Strecke örtlich gestört, und zwar unter Berücksichtigung der Kennwerte von Dreiecksscheiteln, die den auf der optimalen Strecke liegenden Dreiecksscheiteln benachbart sind, indem man die Gesamtlaufzeit in eine Summe von Elementarlaufzeiten zerlegt, die den nacheinander durchlaufenen Entfernungen zwischen den verschiedenen Oberflächen entsprechen, und indem man mit der Gesamtlaufzeit eine quadratische Nachrechnung in Richtung ihrer Minimierung durchführt.

2. Verfahren gemäß Anspruch 1, dadurch gekennzeichnet, daß ein zusätzlicher Schritt C darin besteht, jeden Auftreffpunkt des Strahles auf den Facetten örtlich zu stören, um den Gradienten der Laufzeit durch Iteration derart aufzuheben, daß man die Strahlenbahn mit minimaler Laufzeit erhält.

3. Verfahren nach Anspruch 1 oder 2, dadurch gekennzeichnet daß der Schritt A folgende Einzelschritte umfaßt:

(1) Jeder Auftreffpunkt des Anfangsstrahles wird mit dem Scheitel des nächstliegenden Dreiecks verknüpft;

(2) für jeden Dreiecksscheitel, der dem Auftreffpunkt p1 benachbart ist oder sich dazu in einer Satellitenposition befindet, wird
- die elementare Laufzeit zwischen der Quelle S und dem jeweils aktuellen Scheitel berechnet und
- die so berechnete Laufzeit in einem Speicher abgelegt;

(3) für jedes Satellitenatom $P_{k,i}$ eines Auftreffpunktes $P_k$ ($2 \leqq k \leqq N$) wird
- die Laufzeit zwischen dem aktuellen Atom $P_{k,i}$ und jedem Satellitenatom $P_{k-1,i}$ des Auftreffpunktes $P_{k-1}$ berechnet,
- unter den Satellitenatomen von $P_{k-1}$ dasjenige (als $P_{k-1,j}$ bezeichnete) herausgesucht, für das die Gesamtlaufzeit von der Quelle bis zu $P_{k,i}$ am kleinsten ist, wobei diese Gesamtlaufzeit der Summe der $P_{k-1,j}$ zugeordneten Laufzeiten und der Elementarlaufzeit zwischen $P_{k-1,j}$ und $P_{k,i}$ entspricht,
- die kleinste Laufzeit dem Punkt $P_{k,i}$ zugeordnet,
- das Anschlußglied an den Punkt $P_{k-1,j}$ abgespeichert;

(4) zwischen jedem Satellitenatom des letzten Auftreffpunktes $P_N$ und dem Empfangspunkt wird die elementare Laufzeit berechnet,

(5) dem Empfangspunkt wird die von der Quelle ausgehende minimale Laufzeit zugeordnet,

(6) das Satellitenatom von $P_N$, dem diese minimale Laufzeit entspricht, wird abgespeichert.

4. Verfahren gemäß einem der Ansprüche 1 bis 3, dadurch gekennzeichnet, daß der zweite Schritt B folgende Einzelschritte umfaßt:

(1) Für jeden Auftreffpunkt $P_k$ des Strahls auf einem Dreiecksscheitel wird
- eine zum Normalvektor auf der Dreiecksfläche in diesem Punkt senkrechte Ebene gebildet,
- ein lokaler Bezugsindex ($u_k$, $v_k$) in dieser Ebene festgelegt,
- werden die Projektionsmatrizen jedes Satellitenatoms des aktuellen Punktes auf der lokalen Bezugsebene gebildet,
- werden diese Matrizen im Speicher abgelegt;

(2) für jedes Segment k des stationären atomaren Strahles wird
- eine Gruppe T von Werten $t_{k,1}$ ($u_{k-1,1}$, $v_{k-1,1}$, $u_{k,1}$ $v_{k,1}$) errechnet, die über die Längen von die Satelliten des Punktes $P_{k-1}$ mit den Satelliten des Punktes $P_k$ miteinander verknüpfenden L Segmenten berechnet worden sind,
- der Vektor $c^t$ = ($a_k$, ......, $r_k$) von Koeffizienten eines quadratischen Polynoms $\Phi$ in $u_{k-1}$, $v_{k-1}$, $u_k$ und $v_k$ zur Lösung des Systems geschätzt:

$$\begin{cases} \Phi( \quad - \; - \; - \; - \; - \; ) = t_{k,1} \\ \Phi( \quad - \; - \; - \; - \; - \; ) = t_{k,L} \end{cases} \qquad (S)$$

- der geschätzte Vektor $c^t$ im Speicher abgelegt,
- der Vektor B für die quadratische Anpassung/Nachrechnung der Laufzeit:

$$t_{sr}(\vec{x}) = t_0 + B^t \vec{x} + \vec{x}^t A \vec{x},$$

aus den linearen Termen des Vektors $c^t$ gebildet,

- die Matrix A für die quadratischen Anpassung/Nachrechnung der Laufzeit

$$t_{sr}(\vec{x}) = t_0 + B^t\vec{x} + \vec{x}^t\,A\,\vec{x},$$

aus den quadratischen Termen des Vektors $c^t$ gebildet;

(3) die Konfiguration der Auftreffpunkte P* und der diesem zugehörige Vektor X* ermittelt, der beim stationärem Strahl der Lösung der Gleichung

$$B + 2\,A\vec{X}^* = \vec{0}$$

entspricht.

5. Verfahren gemäß einem der Ansprüche 1 bis 4, dadurch gekennzeichnet, daß der dritte Schritt C folgende Teilschritte umfaßt:

(1) Für jeden Auftreffpunkt des Strahls auf einer Facette der modellierten Grenzflächen werden
- die Übergangsmatrizen vom kartesischen Bezugsindex zum lokalen Bezugsindex des den Auftreffpunkt beinhaltenden Dreiecks gebildet,
- diese Matrizen im Speicher abgelegt;

(2) falls die für die Stabilität der Laufzeit erforderliche Genauigkeit für jeden Auftreffpunkt nicht ausreicht,
- wird der Gradient der Gesamtlaufzeit bezüglich des aktuellen Auftreffpunktes geschätzt,
- werden der Hesse-Matrizen der Gesamtlaufzeit bezüglich des aktuellen Auftreffpunktes geschätzt,
- wird der Auftreffpunkt auf den lokalen Bezugsindex nun so eingerichtet, daß sich der Zeitgradient aufhebt,
- werden die kartesischen Koordinaten der neuen Position des Auftreffpunktes berechnet.

## Claims

1. Method for determining the trajectory of a ray from a first point or source point to a second point or reception point, through a three-dimensional geological structure whose interfaces between layers have been modelled in the form of meshed surfaces comprising a plurality of points, whose geometric coordinates are known and which are joined in pairs by straight line segments defining contiguous triangular faces, this method being characterised in that it comprises the following phases:
   - A determining in the vicinity of any initial ray, amongst the paths starting from the first point and passing through at least one triangle apex of each of the meshed surfaces to end at a second point, the optimum path corresponding to a minimum travel time;
   - B interfering locally with the optimum path thus determined by taking account of the characteristics of the apexes of the triangles adjacent to those used by this optimum path, by breaking down the overall travel time into a sum of constituent travel times corresponding to the distances travelled successively between the different surfaces and by carrying out a quadratic adjustment of the overall travel time, so as to minimize the latter, in order to determine the approximate impact points of the ray on the successive faces that it meets.

2. Method according to Claim 1, characterised in that it comprises an additional phase consisting of interfering locally with each impact point of the ray on the faces, in order to cancel by iteration the gradient of the travel time, so as to obtain the minimum-time trajectory.

3. Method according to one of Claims 1 to 2, characterised in that the first phase A comprises the following steps:
   (1) Joining each point of impact of the initial ray to the apex of the nearest triangle;
   (2) For each triangle apex contiguous with or "satellite" to the point of impact p1:
      - calculating the constituent travel time between the source S and the current apex.
      - saving the travel time thus calculated to memory.
   (3) For each satellite atom $P_{k,i}$ of a point of impact $P_k$ ($2 \leq k \leq N$):
      . calculating the travel time between the current atom $P_{k,i}$ and each satellite atom $P_{k-1,i}$ of the point of impact $P_{k-1}$,

. finding, through the satellite atoms of $P_{k-1}$, the one (denoted as $P_{k-1,j}$) for which the total travel time between the source and $P_{k,i}$ is at its minimum; this total travel time is the sum of the time allocated to $P_{k-1,j}$ and the constituent time between $P_{k-1,j}$ and $P_{k,i}$,

. allocating the minimum time to the point $P_{k,i}$,

. storing in memory the connection with the point $P_{k-1,j}$.

(4) Calculating the constituent travel time between each satellite atom of the last point of impact $P_N$ and the reception point.

(5) Allocating to the reception point the minimum travel time from the source.

(6) Storing in memory the satellite atom of $P_N$ which corresponds to this minimum time.

4. Method according to one of Claims 1 to 3, characterised in that the second phase B comprises the following steps:

(1) For each impact point $P_k$ of the ray on the apex of a triangle:

- constructing the plane that is perpendicular to the vector normal to the triangulate surface at this point,
- building the local reference ($u_k$, $v_k$) in this plane,
- constructing the projection matrices for each satellite atom of the current point on the plane of the local reference,
- saving these matrices to memory.

(2) For each segment k of the stationary atomic ray:

- calculating a set T of values $t_{k,1}(u_{k-1,1}, v_{k-1,1}, u_{k,1}, v_{k,1})$ calculated along the L segments connecting the satellites of the point $P_{k-1}$ to the satellites of the point $P_k$,
- estimating the vector $c^t = (a_k,......,r_k)$ of the coefficients of a quadratic polynomial $\Phi$ of $u_{k-1}$, $v_{k-1}$, $u_k$ and $v_k$ by resolving the system:

$$\left\{ \begin{array}{c} \Phi\ (\ \underline{\hspace{3cm}}\ )\ =\ t_{k,1} \\ \Phi\ (\ \hspace{3cm}\ )\ =\ t_{k,L} \end{array} \right. \qquad (S)$$

- saving the vector $c^t$ thus estimated to memory,
- constructing the vector B, of the quadratic adjustment of the travel time:

$$t_{sr}(\vec{x})\ =\ t_o\ +\ B^t\vec{x}\ +\ \vec{x}^t\ A\vec{x},$$

from the linear terms of $C^t$.

- constructing the matrix A, of the quadratic adjustment of the travel time:

$$t_{sr}(\vec{x})\ =\ t_o\ +\ B^t\vec{x}\ +\ \vec{x}^t\ A\vec{x},$$

from the quadratic terms of $C^t$.

(3) Finding the configuration of the points of impact P* and the vector X* relating thereto, corresponding to the stationary ray that is the solution to the equation:

$$B\ +\ 2\ A\vec{X}^*\ =\ \vec{0}$$

5. Method according to one of Claims 1 to 4, characterised in that the third phase C comprises the following steps:

(1) For each point of impact of the ray on a face of the modelled interfaces:

- constructing the matrices of the passage from the cartesian reference to the local reference of the triangle containing the point of impact,
- saving these matrices to memory;

(2) For as long as the precision required for the stationary state of the travel time is not satisfied for each point of impact:

- estimating the gradient of the overall travel time with respect to the current point of impact,
- estimating the hessian of the overall travel time with respect to the current point of impact,
- repositioning the point of impact in the local reference, in such a way that the time gradient is cancelled,
- calculating the cartesian coordinates of the new position of the point of impact.

FIG.1

FIG.2

FIG.3

FIG. 4

FIG. 5

FIG. 6

FIG. 7

FIG. 8